# EUROPEAN PATENT SPECIFICATION

(11) **EP 2 405 621 B1**
(45) Date of publication and mention of the grant of the patent: **28.08.2013**
(21) Application number: 10168722.6
(22) Date of filing: 07.07.2010
(51) Int. Cl.: H04L 29/06, H04J 3/06, H04L 9/08, H04L 9/12

(54) **A method of time synchronization communication**
Verfahren zur Zeitsynchronisierung von Kommunikation
Procédé de communication de synchronisation horaire

(43) Date of publication of application: 11.01.2012
(73) Proprietor: Siemens Aktiengesellschaft, 80333 München (DE)
(72) Inventor: Ananthasubramanian, Sriram, 560076, Bangalore (IN); Chandramohan, B.A., 560079, Bangalore (IN); Emmanuel, Mathews, 562125, Bangalore (IN); Marimuthu, Ramesh, 560078, Bangalore (IN); Sankara Gounder, Sakthivel, 560100, Bangalore (IN)

(56) References cited:
- US-A1- 2002 056 042
- US-A1- 2003 079 124
- US-A1- 2007 266 256
- HABERMAN B ET AL: "Network Time Protocol Version 4: Autokey Specification; rfc5906.txt", NETWORK TIME PROTOCOL VERSION 4: AUTOKEY SPECIFICATION; RFC5906.TXT, INTERNET ENGINEERING TASK FORCE, IETF; STANDARD, INTERNET SOCIETY (ISOC) 4, RUE DES FALAISES CH- 1205 GENEVA, SWITZERLAND, 21 June 2010 (2010-06-21), pages 1-58, XP015070845, [retrieved on 2010-06-21]

## Description

The present invention relates to time synchronization communication, particularly to a method of communication between a client and a time server in time synchronization communication.

In a distributed control systems or network, it is possible that the main control system, the deployment configurations and the sub-components are installed at different locations, or even in different time zones. The users for example, the Human Machine Interface (HMI) operators or engineers should see and access the runtime process data and values, alarms, diagnostic information or any kind of data in a plant with accurate timestamp so that sequence of events happening in the plant can be monitored, controlled and archived from any devices so that appropriate actions can be taken. In a process automation environment, time synchronization is applicable for synchronizing processes, controlling complex sequences, logging and documenting sequences, validating processes, analyzing processes and also analyzing the causes and effects of events.

In a time synchronization communication one system component provides time information to all the other components in the network so that all the components in the network are synchronized and run with common time information. The time information can either be distributed by a time server which sometimes referred to as a time master, or be requested by the client sometimes referred to as time slaves. If any unintended sources manipulate the timestamps in the network or if they distribute the false timestamps, it will lead to wrong time in the plant and it will endanger the plant operations. So, there is need of secure time synchronization in the plant. It also means that since there is no continuous connection, it is easier for someone to attempt unauthorized communication by simply sending message to a port that is known to be waiting for replies to a time request or replies for any given process running on the host computer. Also it is possible for an intruder to send a manipulated request to a time server. It is also possible to restrict certain internet protocol (IP) addresses to identify the sender and discard the requests received, if not from the desired sender. However, intruder will be able to manipulate the packets including IP headers to send it with actual sender and receiver from a different machine.

To facilitate the time synchronization in network devices, a Network Time Protocol (NTP) standard has been established. One specification related to the NTP standard is released by the Internet Engineering Task Force (IETF) as RFC 5906, under the title, "Network Time Protocol Version 4: Autokey Specification". The aforementioned specification puts forth a security model for authenticating servers to clients using the Network Time Protocol (NTP) and public key cryptography. This specification is incorporated herein in its entirety by reference.

One technique for secure time functionality for a wireless device is known from US patent application 2007/0266256. The patent application discloses a wireless transmit/receive unit (WTRU) for providing advanced security functions including performing trusted computing operations; and providing a secure measurement of a current time. The WTRU includes means for tamper detection in time synchronization.

Another related technique is known from US patent application 2002/0056042. The patent application discloses a trusted time infrastructure system that provides time stamps for electronic documents from a local source. Time stamps and certifications are signed by the issuing device using public key cryptography to enable subsequent authentication.

Yet another related technique is known from US Patent Application 2003/0079124. The patent application provides a central Internet Switch repository with number files database for providing interoperability between Mobile communication network, wire-line and the Internet. The patent application discloses incorporating a public key infrastructure (PKI) system for secure information exchange.

It is an object of the present invention to detect an unauthorized access, early in a time synchronization communication between a client and a time server.

The said object is achieved by a method for sending a public key from a client to a time server for encrypting a response message to the client as part of a time synchronization communication by providing the public key of the time server to the client independently, prior to the start of initiation of a time synchronization communication and further sending an encrypted public key of the client to the time server, wherein the public key of the client is encrypted using the public key of the time server to form the encrypted public key and the time server further decrypts the encrypted public key of the client using the private key of the time server.

The said object is further achieved by a method for a time synchronization communication between a client and a time server. The method comprises sending a public key from the client to the time server by the method said above and also sending a session key response message with a session key by the time server to the client, where the session key is encrypted using the public key of the client and further signed with the private key of the time server. At the client side, the method further comprises verifying the signed session key using the public key of the time server and decrypting the session key using the private key of the client. The client then generates a secured hash value for a time request using the session key received and sends the time request message and the secured hash value to the time server. At the time server, the time request message is verified based on the secured hash value and the session key and based on the verification a time response is send from the time server to the client, where the time response comprises information on a time for performing time synchronization.

The underlying idea is to initially provide the public key of the time server with the client independently of and, prior to the time synchronization communication. The time or sequence of providing the public key of the time server to the client has no binding to the time synchronization communication as such. For example in a networked environment, the public key of the time server is provided to only with the authorized clients. This provides security, ensuring the accessibility of the public key of the time server to only authorized users. During a synchronization communication the public key of the client is encrypted for security and send to the time server. The public key of the client can only be decrypted by the time server using the private key of the time server avoiding any unauthorized access resulting in additional security. Currently in time synchronization communication, for example using a Network Time Protocol (NTP) the public key of the time server is provided to the client by an appropriate response message by the time server for a formal request message by the client. Also, the public key of the client is send to the time server without any encryption. Hence the public key of the time server and the public key of the client are open to an attack or unauthorized access by a third party. Since the step of providing the public key of the time server to the client and sending of the encrypted public key of the client to the time server occurs at the beginning of a time synchronization communication, early detection of an unauthorized access is possible. According to the present invention, since the public key of the time server is provided to only the authorized clients, a third party who is trying to access the time server during a time synchronization communication is considered as an intruder or an unauthorized user. Also since the encrypted public key of the client can only be decrypted by the private key of the time server, any unsuccessful decryption at the time server can also be considered as a detection of an unauthorized access.

In a preferred embodiment, providing the public key of the time server with the client involves pre-installing the public key in the client prior to the time synchronization communication. If the public key is exchanged every time during the initiation of a time synchronization communication, then there is a high possibility of exposing the said public key for unauthorized access to a third party. By pre-installing the public key of the time server in the clients, the above said risk can be avoided.

In an alternative embodiment, providing the public key of the time server to the client involves providing the public key from a secure store to the client, prior to the time synchronization communication. The secure store is a trusted store in the network where the public key of the server could be stored initially and later provided to the client. Since the store is a secured store, the store can be configured to provide the public key only to the authorized clients or could be configured to reject request from unauthorized clients or could be configured to do both.

In an alternative embodiment, the method further comprises sending a signed public key of the client to the time server where the public key of the client is signed using the private key of the client to form the signed public key, and at the time server, verifying the signed public key of the client using the public key of the client which is decrypted by the time server. This provides additional security for the time synchronization communication. Since the plain version of the public key of the client is already decrypted and is available with the time server, successful verification of the signed public key of the client with the plain public key of the client ensures that the public keys are not manipulated and the communication is part of an authorized time synchronization communication.

Since the public and private keys are generated in pairs, signing the public key of the client with the private key of the client enables the verification of a signed message with only the corresponding opposite pair of keys. The method of decrypting an encrypted message also makes use of the corresponding opposite pair of keys. This allows said corresponding operations to be performed successfully by the client and the time server only if they possess the corresponding keys.

In an alternative embodiment, an encrypted public key of the client is send to the time server as part of a time synchronization communication according to NTP standard, where encrypted public key of the client is included in a value field associated with an NTP extension field of the NTP header. To facilitate the time synchronization in network devices, a Network Time Protocol (NTP) standard has been established. It provides a way for all clocks in computers on a network to be synchronized. Since the value field is already provided in an extension field of an NTP header in the NTP protocol stack, the same field can be used to store and send the encrypted public key avoiding any creation of the new field.

In an alternative embodiment, the signed public key of the client is send to the time server as part of a time synchronization communication according to the NTP standard, where the signed public key of the client is included in a signature field associated with an NTP extension field of the NTP header. Since the signature field is already provided in an extension field of an NTP header in the NTP protocol stack, the same field can be used to store and send the signed public key avoiding any creation of the new field.

In an alternative embodiment, an encrypted session key is send to the client by the time server as part of a time synchronization communication according to the NTP standard wherein encrypted session key is included in a value field associated with an NTP extension field of the NTP header. In another alternative embodiment, the signed encrypted session key is send to the client by the time server as part of a time synchronization communication according to the NTP standard wherein the signed encrypted session key is included in a signature field associated with an NTP extension field of the NTP header. Session keys are basically used for identifying and associating all messages of one communication session, thereby ensuring data integrity. The session keys are used to generate a secured hash value by the client, which further is cross checked at the time server for data integrity in a time synchronization communicated between the client and the time server. Since the value field and the signature field are already provided in an extension field of an NTP header in the NTP protocol stack, the same fields can be used to store and send the encrypted public key and the signed encrypted public key respectively avoiding any creation of the new field.

In another alternative embodiment, the client is adapted to send the time request message at plurality of times to the time server for time synchronization during a time synchronization communication. The plurality of time request enables the client to seek time for a constant update of the time information which might be very critical for its operations.

In another alternative embodiment, providing the public key of the time server to the client involves sending the public key by the time server to the client for a single time before sending the time request message by the client to the time server in a time synchronization communication. The sending of the public key by the time server need not be during an NTP communication or NTP packet exchange. Providing the public key for a single time ensures that the public key is not repeatedly send during a time synchronization communication, thereby not exposing it to a third party for any continuous manipulation. For example at the engineering time or the installation time of the time server and the client, the public key of the time server can be send to the client. Once after the client receives the public key, the public key can be permanently stored in the client for further communication. Since the public key is sent to the clients at the engineering time and not at the time of time synchronization communication, it is unlikely that the third party will notice or listen to the transfer of the public key.

In an alternative embodiment, the private key and public key of the time server and client is generated by a key generator. A separate key generator can be used for the generation of the private key and public key of the time server and client. They are generally generated in pairs so that both have common associating parameters, which can be used for encryption and decryption and signing and verification.

The present invention is further described hereinafter with reference to illustrated embodiments shown in the accompanying drawings, in which:
FIG 1 illustrates a network, in which time synchronization is done usually using a time clock,
FIG 2 illustrates a process flow diagram between the client and the time server during time synchronization communication for sending a public key of the client from the client to a time server,
FIG 3 illustrates a process flow diagram between the client and the time server during time synchronization communication for additionally confirming the authenticity of the client according to an embodiment of the invention, and
FIG 4 illustrates a flow chart showing the time synchronization between a client and a time server according to an embodiment of the invention using an NTP protocol.

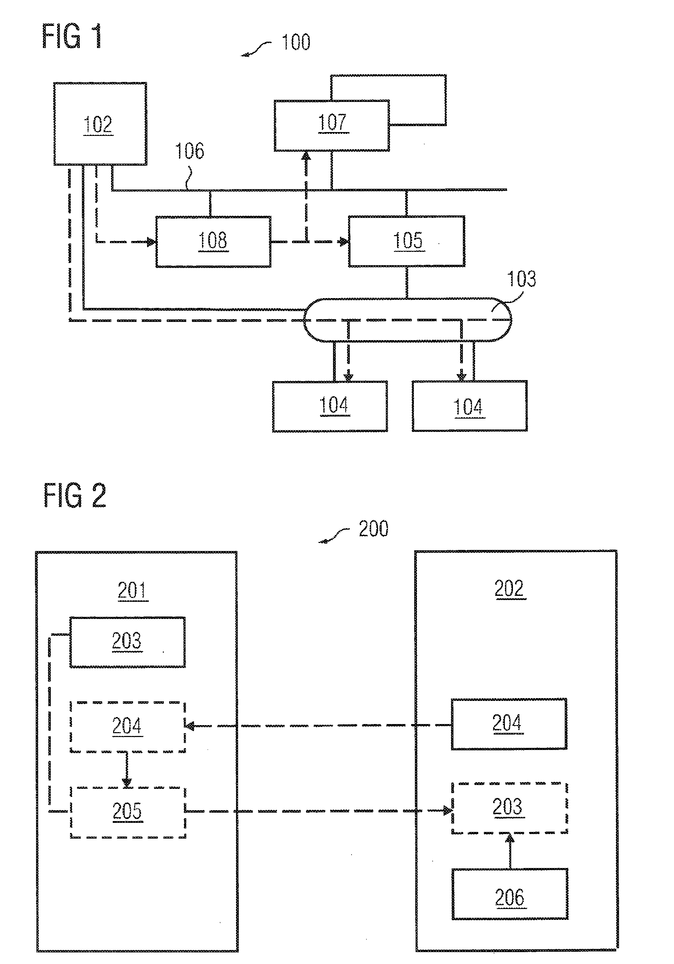

FIG 1 illustrates a domain network 100, in which time synchronization is done using a time clock 102. A plant communication bus 103 is configured for the communication among the automation systems 104 and server 105. The automation system 104 can be a programmable logic controller (PLC). A terminal communication bus 106 is configured for the communication between the clients 107 and the server 105. The plant communication bus 103 is synchronized with the time clock 102. The clock can even be a time server. A domain controller 108 is synchronized directly by the clock 102, which further can synchronize all other domain members, for example the clients 107 and the server 105.

FIG 2 illustrates a process flow diagram 200 between the client 201 and the time server 202 during time synchronization communication. The invention proposes a secured method for sending the public key 203 of the client 201 from a client 201 to a time server 202. The public key 203 of the client 201 is basically send to the time server 202 for encrypting a response message to the client 201 as part of a time synchronization communication.

The time serves 202 has a public key 204 as well as a private key 206. Before the time synchronization communication starts, the public key 204 of the time server 202 is shared with the client 201. The shared public key 204 of the time server is shown in the dotted box for explanation and understanding. Sharing the public key 204 of the time server 202 with the client 201 involves pre-installing the public key in the client prior to the time synchronization communication. In another embodiment sharing the public key 204 of the time server 202 with the client 201 involves sending the public key 204 once by the time server 202 to the client 201 prior to the time synchronization communication. In yet another embodiment, sharing the public key 204 of the time server 202 with the client 201 involves providing the public key 204 from a secure store to the client 201, prior to the time synchronization communication.

The public key 203 of the client is encrypted to form an encrypted public key 205. The public key 203 of the client is encrypted using the public key 204 of the time server 202. The time server 202 decrypts the encrypted public key 205 of the client using the private key 206 of the time server 202. Now the client 201 has securely sent its public key 203 to the time server 202 as well as the time server 202 has the public key 203 of the client 201 for further communication.

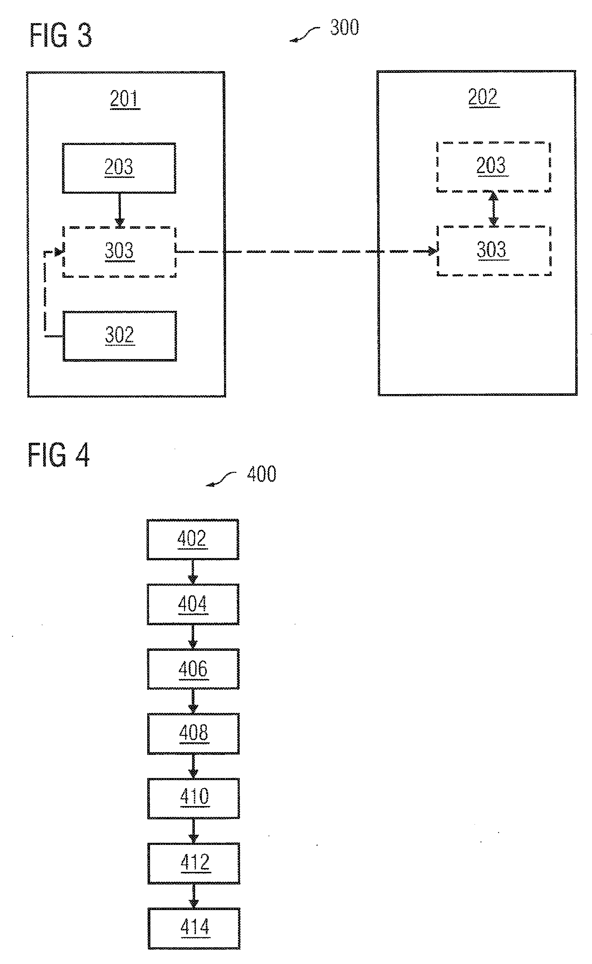

FIG 3 illustrates a process flow diagram 300 between the client 201 and the time server 202 for additionally confirming the authenticity of the client 201 during time synchronization communication. This additional confirmation is in addition to the secured acquisition of the public key 203 of the client 201 by the time server 202 as explained in FIG 2. This step can be made optional, but should be highly preferred for the security reasons.

The public key 203 of the client 201 is signed using the private key 302 of the client 201 to form the signed public key 303. Then the signed public key 303 of the client, which is shown as the dotted box is send to the time server 202 by the client 201. Since the public key 203 of the client, shown in dotted box is already decrypted and kept in the time server 202, it can easily verify the signed public key 303 of the client 201 using the public key 203 of the client 201 decrypted by the time server 202.

FIG 4 illustrates a flow chart 400 showing the time synchronization between a client and a time server according to an embodiment of the invention using an NTP protocol. According to this embodiment, the secured communication discussed according to FIG 2 and FIG 3 can be implemented in a time synchronization communication protocol between a client and a time server, for example the one like NTP protocol. This type of a method for time synchronization communication between a client and a time server comprises, according to step 402; sending a public key 203 from the client 201 to the time server 202 by the method explained according to FIG 1 and FIG 2. The sending of a public key 203 by a client 201 to a time server 202 happens during a session key request. According to the NTP protocol, at step 404, the time sever 202 which might be an NTP server sends a session key response message with a session key to the client 201 which might be an NTP client. The session key is encrypted using the public key 203 of the client and the encrypted session key is further signed with the private key 206 of the time server 202. An NTP header will have an extension field which consists of signature fields as well as value fields. For simplicity the detailed explanation of an NTP header with its entire associated fields are excluded in the description. The encrypted session key is packed in a value field associated with an NTP extension field of the NTP protocol. Further the encrypted session key is signed and packed in a signature field associated with an NTP extension field of the NTP protocol.

On contrary to the above if during a session key request if the client 201 send its public key 203 information without any encryption but just as a plain data, then it is possible for the intruder to get access to the plain data and create attacks during the session key request. The intruder can manipulate the client's public key 203 in the session key request packet. The intruder can then send the manipulated packet to the time server 202. The time server 202 will consider the session key request as valid request since data integrity is not affected. The time server 202 will send session key response to the client 201. The time server 202 then generate a session key and encrypt it with the client's public key 203 which is actually manipulated public key. The server will send the session key response to the client 201. The actual client 201 will receive the session key response, but the client 201 cannot decrypt the session key because the timeserver 202 has encrypted the session key with the manipulated public key of the client 201. The client 201 cannot proceed with time request to the time server 202 without the session key. Hence this leads to the stoppage of communication and an obvious security violation. This is just one out of multiple possibility of an intruder conducting a security threat.

The secured public key transfer described according to the present invention does not enable the intruder to manipulate the public key 203 of the client 201 since it is encrypted during the transfer. According to the present embodiment of the invention, at step 406, the client 201 verifies the signed session key using the public key 204 of the time server 202 and decrypts the session key using the private key 302 of the client 201. At step 408, the client 201 generates a secured hash value using the session key received by the client 201. This hash value is used for a time request which the client 201 request to the time server 202 for time synchronization.

At step 410, the client 201 sends the time request message and the secured hash value to the time server 202. At step 412, the time server 202 verifies the time request message based on the secured hash value and the session key. The secured hash value can be obtained using a hashing algorithm like Message Digest (MD-5) algorithm. According to step 414, when the verification is rightly done then the time server 202, sends a time from the time server 202 to the client 202 for the time synchronization.

Although the invention has been described with reference to specific embodiments, this description is not meant to be construed in a limiting sense. Various modifications of the disclosed embodiments, as well as alternate embodiments of the invention, will become apparent to persons skilled in the art upon reference to the description of the invention. It is therefore contemplated that such modifications can be made without departing from the embodiments of the present invention as defined.

## Claims

1. A method for sending a public key (203) from a client (201) to a time server (202) for encrypting a response message to the client (201) as part of a time synchronization communication, the method comprising:
- providing the public key (204) of the time server (202) to the client (201) independently of and prior to the start of initiation of a time synchronization communication;
- sending an encrypted public key (205) of the client (201) to the time server (202), wherein the public key (203) of the client (201) is encrypted using the public key (204) of the time server (202) to form the encrypted public key (205); and
- the time server (202) decrypting the encrypted public key (205) of the client (201) using the private key (206) of the time server (202).

2. The method according to claim 1, wherein providing the public key (204) of the time server (202) with the client (201) involves pre-installing the public key (204) in the client (201) prior to the time synchronization communication.

3. The method according to claim 1 or 2, wherein providing the public key (204) of the time server (202) to the client (201) involves providing the public key (204) from a secure store to the client (201), prior to the time synchronization communication.

4. The method according to any of the claims 1 to 3, further comprising:
- sending a signed public key (303) of the client (201) to the time server (202) where the public key (203) of the client (201) is signed using the private key (302) of the client (201) to form the signed public key (303), and
- at the time server (202), verifying the signed public key (303) of the client using the public key (203) of the client (201) which is decrypted by the time server (202).

5. The method according to any of the claims 1 to 4, wherein an encrypted public key of the client (201) is send to the time server (202) as part of a time synchronization communication according to NTP standard, where encrypted public key (205) of the client (201) is included in a value field associated with an NTP extension field of the NTP header.

6. The method according to any of the claims 1 to 5, wherein the signed public key (303) of the client (201) is send to the time server (202) as part of a time synchronization communication according to the NTP standard, where the signed public key (303) of the client (201) is included in a signature field associated with an NTP extension field of the NTP header.

7. A method for a time synchronization communication between a client (201) and a time server (202) comprising:
- sending a public key (203) from the client (201) to the time server (202) by the method according to any of the claims 1 to 6;
- sending a session key response message with a session key by the time server (202) to the client (201), where the session key is encrypted using the public key (203) of the client and further signed with the private key (206) of the time server (202);
- at the client (201), verifying the signed session key using the public key (204) of the time server (202) and decrypting the session key using the private key (302) of the client (201);
- generating a secured hash value for a time request using the session key received by the client (201); and
- sending the time request message and the secured hash value by the client (201) to the time server (202);
- at the time server (202), verifying the time request message based on the secured hash value and the session key; and
- sending a time response from the time server (202) to the client (201), where the time response comprises information on a time for performing time synchronization.

8. The method according to any of the claim 7, wherein an encrypted session key is send to the client (201) by the time server (202) as part of a time synchronization communication according to the NTP standard wherein encrypted session key is included in a value field associated with an NTP extension field of the NTP header.

9. The method according to claims 7 or 8, wherein the signed encrypted session key is send to the client (201) by the time server (202) as part of a time synchronization communication according to the NTP standard wherein the signed encrypted session key is included in a signature field associated with an NTP extension field of the NTP header.

10. The method according to any of the claims 1 to 9, wherein the client (201) is adapted to send the time request message at plurality of times to the time server (202) for time synchronization during a time synchronization communication.

11. The method according to any of the claims 1 to 10, wherein providing the public key (204) of the time server (202) to the client (201) involves sending the public key (204) by the time server (202) to the client (201) for a single time before sending the time request message by the client (201) to the time server (202) in a time synchronization communication.

12. The method according to any of the claims 1 to 11, wherein the private keys (206, 302) and public keys (204, 203) of the time server (202) and client (201) are generated by a key generator.

## Patentansprüche

1. Verfahren zum Senden eines öffentlichen Schlüssels (203) von einem Client (201) an einen Zeit-Server (202) zum Verschlüsseln einer Antwortmeldung an den Client (201) als Teil einer Zeitsynchronisierungskommunikation, wobei das Verfahren das Folgende aufweist:
- Bereitstellen des öffentlichen Schlüssels (204) des Zeit-Servers (202) für den Client (201) unabhängig von und vor dem Beginn der Auslösung einer Zeitsynchronisierungskommunikation;
- Senden eines verschlüsselten öffentlichen Schlüssels (205) des Client (201) an den Zeit-Server (202), wobei der öffentliche Schlüssel (203) des Client (201) unter Verwendung des öffentlichen Schlüssels (204) des Zeit-Servers (202) verschlüsselt wird, um den verschlüsselten öffentlichen Schlüssel (205) zu bilden; und
- Entschlüsseln des verschlüsselten öffentlichen Schlüssels (205) des Client (201) durch den Zeit-Server (202) unter Verwendung des Privatschlüssels (206) des Zeit-Servers (202).

2. Verfahren nach Anspruch 1, wobei das Bereitstellen des öffentlichen Schlüssels (204) des Zeit-Servers (202) für den Client (201) das Vorinstallieren des öffentlichen Schlüssels (204) in dem Client (201) vor der Zeitsynchronisierungskommunikation umfasst.

3. Verfahren nach Anspruch 1 oder 2, wobei das Bereitstellen des öffentlichen Schlüssels (204) des Zeit-Servers (202) für den Client (201) das Bereitstellen des öffentlichen Schlüssels (204) aus einem sicheren Speicher für den Client (201) vor der Zeitsynchronisierungskommunikation umfasst.

4. Verfahren nach einem der Ansprüche 1 bis 3, welches ferner das Folgende umfasst:
- Senden eines signierten öffentlichen Schlüssels (303) des Client (201) an den Zeit-Server (202), wobei der öffentliche Schlüssel (203) des Client (201) unter Verwendung des Privatschlüssels (302) des Client (201) signiert wird, um den signierten öffentlichen Schlüssel (303) zu bilden, und
- Verifizieren des signierten öffentlichen Schlüssels (303) des Client am Zeit-Server (202) unter Verwendung des öffentlichen Schlüssels (203) des Client (201), welcher von dem Zeit-Server (202) entschlüsselt wird.

5. Verfahren nach einem der Ansprüche 1 bis 4, wobei ein verschlüsselter öffentlicher Schlüssel des Client (201) als Teil einer Zeitsynchronisierungskommunikation nach NTP-Standard an den Zeit-Server (202) gesendet wird, wobei der verschlüsselte öffentliche Schlüssel (205) des Client (201) in einem Wertefeld enthalten ist, das zu einem NTP-Erweiterungsfeld des NTP-Anfangsblocks gehört.

6. Verfahren nach einem der Ansprüche 1 bis 5, wobei der signierte öffentliche Schlüssel (303) des Client (201) als Teil einer Zeitsynchronisierungskommunikation nach NTP-Standard an den Zeit-Server (202) gesendet wird, wobei der signierte öffentliche Schlüssel (303) des Client (201) in einem Signaturfeld enthalten ist, das zu einem NTP-Erweiterungsfeld des NTP-Anfangsblocks gehört.

7. Verfahren für eine Zeitsynchronisierungskommunikation zwischen einem Client (201) und einem Zeit-Server (202), welches das Folgende aufweist:
- Senden eines öffentlichen Schlüssels (203) von dem Client (201) an den Zeit-Server (202) über das Verfahren nach einem der Ansprüche 1 bis 6;
- Senden einer Sitzungsschlüssel-Antwortmeldung mit einem Sitzungsschlüssel von dem Zeit-Server (202) an den Client (201), wobei der Sitzungsschlüssel unter Verwendung des öffentlichen Schlüssels (203) des Client verschlüsselt und ferner mit dem Privatschlüssel (206) des Zeit-Servers (202) signiert wird;
- Verifizieren des signierten Sitzungsschlüssels am Client (201) unter Verwendung des öffentlichen Schlüssels (204) des Zeit-Servers (202) und Entschlüsseln des Sitzungsschlüssels unter Verwendung des Privatschlüssels (302) des Client (201);
- Erzeugen eines gesicherten Hashwerts für eine Zeitanforderung unter Verwendung des von dem Client (201) empfangenen Sitzungsschlüssels und
- Senden der Zeitanforderungsmeldung und des gesicherten Hashwerts durch den Client (201) an den Zeit-Server (202);
- Verifizieren der Zeitanforderungsmeldung auf der Basis des gesicherten Hashwerts und des Sitzungsschlüssels am Zeit-Server (202) und
- Senden einer Zeitantwort von dem Zeit-Server (202) an den Client (201), wobei die Zeitantwort Informationen über eine Zeit zum Durchführen der Zeitsynchronisierung aufweist.

8. Verfahren nach Anspruch 7, wobei ein verschlüsselter Sitzungsschlüssel als Teil einer Zeitsynchronisierungskommunikation nach NTP-Standard von dem Zeit-Server (202) an den Client (201) gesendet wird, wobei der verschlüsselte Sitzungsschlüssel in einem Wertefeld enthalten ist, das zu einem NTP-Erweiterungsfeld des NTP-Anfangsblocks gehört.

9. Verfahren nach Anspruch 7 oder 8, wobei der signierte verschlüsselte Sitzungsschlüssel als Teil einer Zeitsynchronisierungskommunikation nach NTP-Standard von dem Zeit-Server (202) an den Client (201) gesendet wird, wobei der signierte verschlüsselte Sitzungsschlüssel in einem Signaturfeld enthalten ist, das zu einem NTP-Erweiterungsfeld des NTP-Anfangsblocks gehört.

10. Verfahren nach einem der Ansprüche 1 bis 9, wobei der Client (201) dafür ausgelegt ist, die Zeitanforderungsmeldung zu mehreren Zeiten für eine Zeitsynchronisierung während einer Zeitsynchronisierungskommunikation an den Zeit-Server (202) zu senden.

11. Verfahren nach einem der Ansprüche 1 bis 10, wobei das Bereitstellen des öffentlichen Schlüssels (204) des Zeit-Servers (202) für den Client (201) das Senden des öffentlichen Schlüssels (204) von dem Zeit-Server (202) an den Client (201) für ein einziges Mal vor dem Senden der Zeitanforderungsmeldung von dem Client (201) an den Zeit-Server (202) in einer Zeitsynchronisierungskommunikation umfasst.

12. Verfahren nach einem der Ansprüche 1 bis 11, wobei die Privatschlüssel (206, 302) und öffentlichen Schlüssel (204, 203) des Zeit-Servers (202) und Client (201) durch einen Schlüsselgenerator erzeugt werden.

## Revendications

1. Procédé d'envoi d'une clé ( 203 ) publique d'un client ( 201 ) à un serveur ( 202 ) temporel pour chiffrer un message de réponse au client ( 201 ) en tant que partie d'une communication en synchronisation temporelle, procédé dans lequel :
- on procure la clé ( 204 ) publique du serveur ( 202 ) temporel au client ( 201 ) indépendamment du début du déclenchement d'une communication en synchronisation temporelle et avant ce début ;
- on envoie une clé ( 205 ) publique chiffrée du client ( 201 ) au serveur ( 202 ) temporel, la clé ( 203 ) publique du client ( 201 ) étant chiffrée en utilisant la clé ( 204 ) publique du serveur ( 202 ) temporel pour former la clé ( 205 ) publique chiffrée ; et
- le serveur ( 202 ) temporel déchiffre la clé ( 205 ) publique chiffrée du client ( 201 ) en utilisant la clé ( 206 ) privée du serveur ( 202 ) temporel.

2. Procédé suivant la revendication 1, dans lequel procurer la clé ( 204 ) publique du serveur ( 202 ) temporel au client ( 201 ) implique préinstaller la clé ( 204 ) publique chez le client ( 201 ) avant la communication en synchronisation temporelle.

3. Procédé suivant la revendication 1 ou 2, dans lequel procurer la clé ( 204 ) publique du serveur ( 202 ) temporel au client ( 201 ) implique procurer la clé ( 204 ) publique d'une mémoire sécurisée au client ( 201 ) avant la communication en synchronisation temporelle.

4. Procédé suivant l'une quelconque des revendications 1 à 3, dans lequel, en outre :
- on envoie une clé ( 303 ) publique signée du client ( 201 ) au serveur ( 202 ) temporel, la clé ( 203 ) publique du client ( 201 ) étant signée en utilisant la clé ( 302 ) privée du client ( 201 ) pour former la clé ( 303 ) publique signée, et
- au serveur ( 202 ) temporel, on vérifie la clé ( 303 ) publique signée du client en utilisant la clé ( 203 ) publique du client ( 201 ), qui est déchiffrée par le serveur ( 202 ) temporel.

5. Procédé suivant l'une quelconque des revendications 1 à 4, dans lequel on envoie une clé publique chiffrée du client ( 201 ) au serveur ( 202 ) temporel comme partie d'une communication en synchronisation temporelle suivant la norme NTP, une clé ( 205 ) publique chiffrée du client ( 201 ) étant incluse dans un champ de valeur associé à un champ d'extension NTP de l'entête NTP.

6. Procédé suivant l'une quelconque des revendications 1 à 5, dans lequel on envoie la clé ( 303 ) publique signée du client ( 201 ) au serveur ( 202 ) temporel comme partie d'une communication en synchronisation temporelle suivant la norme NTP, la clé ( 303 ) publique signée du client ( 201 ) étant incluse dans un champ de signature associé à un champ d'extension NTP de l'entête NTP.

7. Procédé pour une communication en synchronisation temporelle entre un client ( 201 ) et un serveur ( 202 ) temporel, dans lequel :
- on envoie une clé ( 203 ) publique du client ( 201 ) au serveur ( 202 ) temporel par le procédé suivant l'une quelconque des revendications 1 à 6 ;
- on envoie un message de réponse de clé de session ayant une clé de session par le serveur ( 202 ) temporel au client ( 201 ), la clé de session étant chiffrée en utilisant la clé ( 203 ) publique du client et, en outre, signée par la clé ( 206 ) privée du serveur ( 202 ) temporel ;
- chez le client ( 201 ) , on vérifie la clé de session signée en utilisant la clé ( 204 ) publique du serveur ( 202 ) temporel et on déchiffre la clé de session en utilisant la clé ( 302 ) privée du client ( 201 ) ;
- on produit une valeur de hash sécurisée pour une demande temporelle en utilisant la clé de session reçue par le client ( 201 ) ; et
- on envoie le message de demande temporelle et la valeur de hash sécurisée par le client ( 201 ) au serveur ( 202 ) temporel ;
- au serveur ( 202 ) temporel, on vérifie le message de demande temporelle sur la base de la valeur de hash sécurisée et de la clé de session ; et
- on envoie une réponse temporelle du serveur ( 202 ) temporel au client ( 201 ), la réponse temporelle comprenant de l'information sur un temps pour effectuer une synchronisation temporelle.

8. Procédé suivant la revendication 7, dans lequel on envoie la clé de session chiffrée au client ( 201 ) par le serveur ( 202 ) temporel comme partie d'une communication en synchronisation temporelle suivant la norme NTP, la clé de session chiffrée étant incluse dans un champ de valeur associé à un champ d'extension NTP de l'entête NTP.

9. Procédé suivant la revendication 7 ou 8, dans lequel on envoie la clé de session chiffrée signée au client ( 201 ) par le serveur ( 202 ) temporel comme partie d'une communication en synchronisation temporelle suivant le standard NTP, la clé de session chiffrée signée étant incluse dans un champ de signature associé à un champ d'extension NTP de l'entête NTP.

10. Procédé suivant l'une quelconque des revendications 1 à 9, dans lequel le client ( 201 ) est adapté pour envoyer le message de demande temporelle en une pluralité de fois au serveur ( 202 ) temporel pour une synchronisation temporelle pendant une communication en synchronisation temporelle.

11. Procédé suivant l'une quelconque des revendications 1 à 10, dans lequel procurer la clé ( 204 ) publique du serveur ( 202 ) temporel au client ( 201 ) implique envoyer la clé ( 204 ) publique par le serveur ( 202 ) temporel au client ( 201 ) une seule fois avant d'envoyer le message de demande temporelle par le client ( 201 ) au serveur ( 202 ) temporel dans une communication en synchronisation temporelle.

12. Procédé suivant l'une quelconque des revendications 1 à 11, dans lequel les clés ( 206, 302 ) privées et les clés ( 204, 203 ) publiques du serveur ( 202 ) temporel et du client ( 201 ) sont produites par un générateur de clé.
